# EUROPEAN PATENT APPLICATION

(11) **EP 2 290 021 A1**
(43) Date of publication of application: **02.03.2011**
(21) Application number: 10172651.1
(22) Date of filing: 12.08.2010
(51) Int. Cl.: C09D 11/00

(54) **Inkjet ink**

(30) Priority: 28.08.2009 US 237812 P
(71) Applicant: Kabushiki Kaisha Toshiba, Tokyo 105-8001 (JP); Toshiba TEC Kabushiki Kaisha, Tokyo 141-8664 (JP)
(72) Inventor: Akiyama, Ryozo, Shinagawa-ku Tokyo 141-8664 (JP); Kiyomoto, Hiroshi, Shinagawa-ku Tokyo 141-8664 (JP)
(74) Representative: Gendron, Vincent Christian

(57) **Abstract**

According to one embodiment, an inkjet ink includes a pigment, an aqueous liquid, an oil liquid, and a monohydric aliphatic alcohol that has 3 or fewer carbon atoms, and is soluble in the aqueous liquid and the oil liquid. The aqueous liquid accounts for 10 to 70% by weight of the inkjet ink, and the oil liquid accounts for 70 to 10% by weight of the inkjet ink. At least a part of the oil liquid is an aromatic alcohol represented by general formula AA, 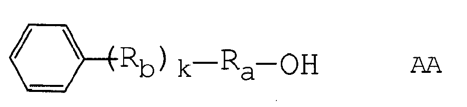 where Rₐ represents an aliphatic hydrocarbon group having 1 to 5 carbon atoms, R_{b} represents -O- or -CH₂O-, and k represents 0 or 1.

## Description

### FIELD

Embodiments described herein relate generally to inkjet ink.

### BACKGROUND

Ink produced by dispersing a pigment in an aqueous medium is proposed. Ink using pigments has superior waterfastness and lightfastness compared with ink of the related art that uses water-soluble dyes.

However, pigmented inkjet recording ink that excels in fast dryness and is suited for recording in paper medium, and that can produce high-quality image on paper medium without causing distortion in paper medium is not available.

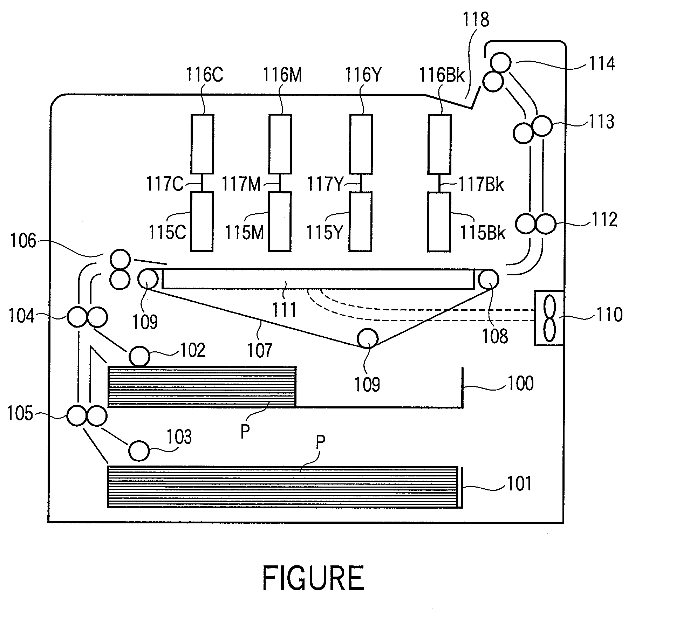

### BRIEF DESCRIPTION OF THE DRAWING

The single figure shows an example of an inkjet recording apparatus to which an embodiment is applied.

### DETAILED DESCRIPTION

In general, according to one embodiment, an inkjet ink includes a pigment, an aqueous liquid, an oil liquid, and a monohydric aliphatic alcohol that has 3 or fewer carbon atoms, and is soluble in the aqueous liquid and the oil liquid. The aqueous liquid accounts for 10 to 70% by weight of the inkjet ink, and the oil liquid accounts for 70 to 10% by weight of the inkjet ink. At least a part of the oil liquid is an aromatic alcohol represented by general formula AA, 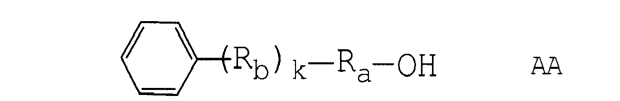 where Rₐ represents an aliphatic hydrocarbon group having 1 to 5 carbon atoms, R_{b} represents -O-or -CH₂O-, and k represents 0 or 1.

The following specifically describes embodiments.

In the inkjet recording apparatus in the figure, paper cassettes 100 and 101 each of which holds paper P of different size. A paper feed roller 102 or 103 takes out the paper P in response to the selected paper size from the paper cassette 100 or 101 and conveys it to conveyance roller pairs 104 and 105 and a resist roller pair 106.

A tension is given to a conveyance belt 107 by a drive roller 108 and two driven rollers 109. Holes are provided at predetermined intervals on the surface of the conveyance belt 107, and for the purpose of adsorbing the paper P onto the conveyance belt 107, a negative-pressure chamber 111 connected to a fan 110 is installed in the inside of the conveyance belt 107. Conveyance roller pairs 112, 113, and 114 are installed in the downstream of the paper conveyance direction of the conveyance belt 107.

Four rows of inkjet heads that eject inks on a paper according to image data are disposed above the conveyance belt 107. An inkjet head 115C which ejects a cyan (C) ink, an inkjet head 115M which ejects a magenta (M) ink, an inkjet head 115Y which ejects a yellow (Y) ink, and an inkjet head 115Bk which ejects a black (Bk) ink are arranged in this order from the upstream. Further, these inkjet heads 115C, 115M, 115Y, and 115Bk are provided with a cyan (C) ink cartridge 116C, a magenta (M) ink cartridge 116M, a yellow (Y) ink cartridge 116Y, and a black (Bk) ink cartridge 116Bk, respectively, each of which contains an ink of each color. These cartridges are connected to the inkjet heads via tubes 117C, 117M, 117Y, and 117Bk, respectively.

An image forming operation of the apparatus for inkjet printing having a configuration as described above is described below.

First, image processing for printing by an image processor (not shown) is initiated, and image data for printing are transferred to the respective inkjet heads 115C, 115M, 115Y, and 115Bk. Also, a sheet of the paper P of a selected paper size is taken out one by one from the paper cassette 100 or 101 by the paper feed roller 102 or 103 and conveyed to the conveyance roller pairs 104 and 105 and the resist roller pair 106. The resist roller pair 106 corrects a skew of the paper P and conveys the paper at a predetermined timing.

The negative-pressure chamber 111 draws air through the holes of the conveyance belt 107, and therefore, the paper P is conveyed in a state that it is adsorbed onto the conveyance belt 107 in a lower side of the inkjet heads 115C, 115M, 115Y, and 115Bk. Thus, the respective inkjet heads 115C, 115M, 115Y, and 115Bk and the paper P can keep a fixed space from each other. The ink of each color is ejected from each of the inkjet heads 115C, 115M, 115Y, and 115Bk in synchronism with the timing for conveying the paper P from the resist roller pair 106. Thus, a color image is formed at a desired position on the paper P. The paper P having an image formed thereon is discharged into a paper discharge tray 118 by the conveyance roller pairs 112, 113, and 114.

Each ink cartridge stores an inkjet ink of an embodiment.

The inkjet ink according to one embodiment contains an aqueous liquid, an oil liquid, and a specific monohydric aliphatic alcohol soluble in both the aqueous liquid and the oil liquid, and a pigment. The pigment is dispersed in a mixture of aqueous liquid and oil liquid solubilized by a specific monohydric aliphatic alcohol.

Because the mixture is used as a dispersion medium, the inkjet ink according to one embodiment has the characteristics of both an aqueous ink and an oil ink. That is, the ink of one embodiment excels in fast dryness, and can form a high-quality image on paper medium while suppressing distortion in paper medium. Further, because of the excellent pigment dispersion stability, the ink can be stably ejected through the printer head nozzles.

As used herein, the "paper medium" generally refers to various kinds of paper medium intended for printing. The paper medium can be broadly classified into coated paper and non-coated paper, the former including art paper and coat paper to which materials for improving print characteristics are applied, and the latter representing a class of papers that exploits the characteristics of the paper itself. The paper medium has a variety of applications, such as in books, documents, newspapers, wrapping, and printer papers. The paper medium also includes thick papers such as cardboards, paper containers, and boxboards. For example, so-called plain paper such as copy paper to be used in a copier or a printer for office or home use is a typical paper medium.

As described above, in one embodiment, the aqueous liquid and the oil liquid mix together by being solubilized by a specific monohydric aliphatic alcohol, and a pigment is dispersed in the mixture.

The pigment is not particularly limited, and any of an inorganic pigment and an organic pigment may be used. Examples of the inorganic pigment include titanium oxide and iron oxide. Further, a carbon black produced by a known method such as a contact method, a furnace method, or a thermal method can be used.

As the organic pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate, or an acid dye type chelate), a nitro pigment, a nitroso pigment, Aniline Black or the like can be used.

Specific examples of the carbon black which is used as the black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa AG).

Specific examples of the pigment which is used in the yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in the magenta ink include C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in the cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

Since the ink is an inkjet ink, it is preferred that the pigment has an average particle diameter of from about 10 to 300 nm. It is more preferred that the pigment has an average particle diameter of from about 10 to 200 nm.

The average particle diameter of the pigment can be measured using a particle diameter analyzer according to a dynamic light scattering method. An example of a particle diameter analyzer is HPPS (Malvern).

The pigment can be used in the state of a pigment dispersion. The pigment dispersion can be prepared by, for example, dispersing the pigment in water or in an alcohol with a dispersant. Examples of dispersant include a surfactant, a water-soluble resin, and a water-insoluble resin. Alternatively, the pigment can be used in the form of a self-dispersing pigment dispersible in, for example, water, without using a dispersant. The self-dispersing pigment is of a form dispersible in water or the like without a dispersant, and to which at least one functional group selected from a carbonyl group, a carboxyl group, a hydroxyl group, and a sulfone group, or a salt thereof is attached by a surface treatment. The surface treatment may be, for example, a vacuum plasma process, a diazo coupling process, or an oxidation treatment. The self-dispersing pigment can be obtained by grafting the functional group or a functional group-containing molecule to the pigment surface using such surface treatments.

Monohydric aliphatic alcohols having 3 carbon atoms or fewer such as ethanol and propanol are soluble in both the aqueous liquid and the oil liquid, and suppresses the phase separation of the dispersion medium. Thus, by dispersing the pigment in the monohydric aliphatic alcohol, the storage stability of the ink can be improved.

The pigment content in the ink is preferably 2 to 20% by weight of the total ink. Within this range, prints having required image densities can be produced without causing inconvenience in ink storage stability and ejection performance. The pigment content in the ink is more preferably 3 to 10% by weight.

The inkjet ink of one embodiment can be obtained by blending the pigment dispersion with a dispersion medium formed of a predetermined mixture. The dispersion medium contains the aqueous liquid and the oil liquid blended in predetermined amounts, and a specific monohydric aliphatic alcohol soluble in both the aqueous liquid and the oil liquid. The dispersion medium can be regarded as a solubilized liquid of the aqueous liquid and the oil liquid. The ink of one embodiment using such a dispersion medium thus has the advantages of both the aqueous ink and the oil ink. That is, the ink can permeate the paper medium faster than the aqueous ink at the level close to that of the oil ink. Further, the ink can dry out from the paper medium faster than the aqueous ink at the level close to that of the oil ink. The adverse effects on paper medium, such as curling and cockling, are smaller than that seen with the use of the aqueous ink. Further, the resulting image has the quality comparable to that produced by the aqueous ink.

In the ink of one embodiment, the aqueous liquid content is specified as 10 to 70% by weight of the total ink. At an aqueous liquid content less than 10% by weight, the effect of the oil liquid becomes too large, and it becomes difficult to suppress the permeation of the ink in the paper medium. An aqueous liquid content above 70% by weight produces images of improved image quality, but is not sufficient to provide a desired level of permeation. Further, drying of ink, which depends on the permeation of the ink, becomes slow.

Desirably, water accounts for at least 40% by weight of the aqueous liquid. If the aqueous liquid were entirely water, the negative effect on pigment dispersion stability becomes even smaller, and the storage stability of the ink is improved.

The aqueous liquid content is closely associated with the extent of paper medium distortion, and water itself causes distortion in paper medium. The paper medium is distorted more as the amount of aqueous liquid that permeates the paper increases. Thus, the content of aqueous liquid in the ink is specified as 70% by weight or less. Preferably, the aqueous liquid is 20 to 40% by weight of the total ink.

The aqueous liquid may contain a water-soluble compound. Containing a water-soluble compound has the advantage of adjusting ink viscosity, and improving storage stability and moisture retention. Further, the ejection stability of the ink can be further improved.

Examples of water-soluble compound include glycerin, diglycerin, polyglycerin, ethylene glycol, diethylene glycol, triethylene glycol, polyethylene glycol, tripropylene glycol, polypropylene glycol, 1,2,6-hexanetriol, 1,2,4-butanetriol, 1,2,3-butanetriol, 3-methyl-1,3,5-pentanetriol, sorbitol, mannitol, and maltitol.

In the ink of one embodiment, the oil liquid content is specified as 70 to 10% by weight of the total ink. An oil liquid content above 70% by weight causes image quality deterioration. On the other hand, less than 10% by weight, the effect of the aqueous liquid increases, and the fast-drying property suffers. Further, distortion of paper medium becomes more likely to occur. Thus, the oil liquid content is preferably 60 to 20% by weight of the total ink.

At least a part of the oil liquid is an aromatic alcohol represented by the following general formula AA. 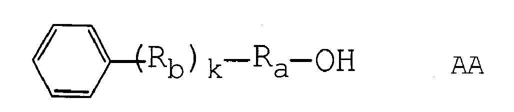 where Rₐ represents an aliphatic hydrocarbon group having 1 to 5 carbon atoms, R_{b} represents -O- or -CH₂-, and k represents 0 or 1.

As the hydrocarbon group Rₐ, for example, -CH₂-, -(CH₂)₂-, -(CH₂)₃-, -(CH₂)₄-, -CH(CH₃)CH₂-, and -CH₂CH(CH₃)- can be used.

Examples of the compound represented by general formula AA include benzyl alcohol (Cas. 100-51-6), 2-phenylethyl alcohol (Cas. 60-12-8), 3-phenyl-1-propanol (Cas. 122-97-4), 4-phenyl-1-butanol (Cas. 3360-41-6), 2-phenyl-1-propanol (Cas. 1123-85-9), 1-phenyl-2-propanol (Cas. 14898-87-4), phenoxyethanol (Cas. 122-99-6), phenoxypropanol (Cas. 770-35-4, Cas. 4169-04-4), phenyl diglycol (Cas. 104-68-7), and benzyl glycol (Cas. 622-08-2).

Considering storage stability and ejection performance of the ink, benzyl alcohol (Rₐ: -CH₂-, k = 0), phenyl glycol (Rₐ: -(CH₂)₂-, R_{b}: -O-), phenoxypropanol (Rₐ: -CH(CH₃)CH₂-, R_{b}: -O-), phenyl propylene glycol (Rₐ: -CH₂CH(CH₃)-, R_{b}: -O-), and benzyl glycol (Rₐ: -(CH₂)₂-, R_{b}: -CH₂O-) are particularly preferable.

The aromatic alcohol preferably accounts for at least 70% by weight of the oil liquid. The remaining oil liquid in the paper causes bleed or produces gloss, and the print quality deteriorates. Because the aromatic alcohol does not usually remain in the paper, print quality can be improved if the oil liquid were entirely the aromatic alcohol.

The oil liquid may contain a water-insoluble organic solvent, examples of which include hexyl glycol, 2-ethylhexyl glycol, 2-ethylhexyl diglycol, dibutyl diglycol, n-nonanol, n-hexanol, n-heptanol, diethyl adipate, ethylhexyl palmitate, isocetyl myristate, and benzyl propionate. Other examples include mineral oil such as paraffinic oil, naphthenic oil, spindle oil, and machine oil; vegetable oil such as linseed oil, castor oil, soy oil, and tung oil; and hydrocarbons having 30 carbon atoms or fewer.

The characteristics of the resulting ink remain the same even in the presence of such a water-insoluble organic solvent, provided that its content is at most 30% weight of the oil liquid. For example, if naphthenic oil accounts for about 20% by weight of the oil liquid, the permeation and drying properties can be further improved.

The ink of one embodiment contains a specific monohydric aliphatic alcohol soluble in both the aqueous liquid and the oil liquid. The monohydric aliphatic alcohol can thus be regarded as a solubilizer that solubilizes the aqueous liquid and the oil liquid that are basically immiscible to each other.

The monohydric aliphatic alcohol is specified to have 3 or fewer carbon atoms. Specific examples include methanol, ethanol, n-propyl alcohol, and isopropyl alcohol. Vapor pressure of these alcohols at 25°C is 20 mmHg or more. In other words, the monohydric aliphatic alcohol is a highly volatile alcohol.

The monohydric aliphatic alcohol can exhibit effects without any inconvenience, provided that its content is 10 to 50% by weight of the total inkjet ink. More preferably, the amount of monohydric aliphatic alcohol is 20 to 50% by weight of the total ink.

In the ink of one embodiment, the aqueous liquid and the oil liquid are contained in the dispersion medium. The aqueous liquid and the oil liquid have different permeation rates for paper. That is, the aqueous liquid has a slower permeation rate, and the oil liquid permeates faster than the aqueous liquid. Accordingly, the aqueous liquid and the oil liquid start separating from each other as soon as they permeate in the paper. The pigment is stably dispersed in the dispersion medium dissolving the aqueous liquid and the oil liquid; however, the dispersion stability of the pigment in the ink decreases as the aqueous liquid and the oil liquid separate from each other. Because the compatibility between the aqueous liquid and the oil liquid is disrupted, the pigment particles start to agglomerate. As a result, the permeation of the pigment in the paper is suppressed.

Because the pigment remains near the paper surface, the resulting image density is higher than that produced by the oil ink. Because the oil liquid is a part of the dispersion medium, the aqueous liquid content in the ink is smaller than that in a common aqueous ink. It is therefore possible to suppress the adverse effects on paper medium, such as curling and cockling.

As noted above, the ink of one embodiment contains a highly volatile alcohol. As the ink permeates the paper, the alcohol starts evaporating from the ink that comes to have a greatly increased surface area. Thus, the compatibility between the aqueous liquid and the oil liquid is reduced in a shorter time period than in an ink containing a non-volatile alcohol. The phase separation of the aqueous liquid and the oil liquid proceeds more quickly than when a non-volatile alcohol is used. As a result, the drying speed increases.

The oil liquid itself has a low surface tension, and accordingly the surface tension of the ink is small. An aqueous ink that contains no oil liquid requires the addition of a surfactant to suppress the surface tension. By the inclusion of the oil liquid with the aqueous liquid, a surfactant is not necessarily required, and the formulation can be simplified.

The inkjet ink according to one embodiment can be prepared by mixing predetermined amounts of aqueous liquid and oil liquid with a solubilizer and a pigment dispersion. The intended inkjet ink can then be obtained upon adding an optional additive to the mixture as required.

Because the ink is for inkjet recording, the inkjet ink according to one embodiment needs to have a viscosity appropriate for ejection through the head nozzles of an inkjet printer. That is, a viscosity of the ink at 25°C is preferably from 3 to 50 mPa·s. With a viscosity of 30 mPa·s or less, a relatively low head control temperature can be set for the ejection operation.

In order to set optimum conditions for inkjet ink properties such as ejection performance, moisture retention, storage stability, and proper property values, components such as a surfactant, a moisturizer, and a resin may be additionally blended to the extent that the effects are not lost.

Examples of surfactant include polyoxyethylenealkyl ether, polyoxyalkylenealkyl ether, polyoxyethylene polycyclic phenylether, polyoxyalkylene polycyclic phenylether, and glycerin fatty acid ester.

Acetyleneglycol surfactants and fluorosurfactants also can be used. Examples of acetyleneglycol surfactant include 2,4,7,9-tetramethyl-5-decyne-4,7-diol, 3,6-dimethyl-4-octine-3,6-diol, and 3,5-dimethyl-1-hexin-3-ol. Specifically, Surfynol 104, 61, 465, 485, and TG (Air Products) can be used, for example.

Examples of fluorosurfactant include a perfluoroalkylethylene oxide adduct, perfluoroalkylamine oxide, perfluoroalkyl carboxylate, and perfluoroalkyl sulfonic acid. Specifically, Megafac F-443, F-444, F-470, F-494 (DIC Corporation), Novec FC-430, FC-4430 (3M), and Surflon S-141, S-145, S-111N, S-113 (AGC Seimi Chemical Co., Ltd.) can be used.

It is desirable that the surfactant be added in amounts that are not detrimental to the dispersion stability or other properties of the ink. The surfactant can exhibit its effect without causing any inconvenience, as long as it is about 1.0% by weight or less of the total ink.

Additives such as a pH adjuster, a preservative, and/or an anti-fungal agent may be blended, as required. Examples of pH adjuster include potassium dihydrogen phosphate, disodium hydrogen phosphate, and sodium hydroxide.

Examples of preservative and anti-fungal agent include sodium benzoate, pentachlorophenol sodium, 2-pyridinethiol-1-oxide sodium, sodium sorbate, sodium dehydroacetate, and 1,2-dibenzisothiazolin-3-one (Proxel CRL, Proxel BDN, Proxel GXL, Proxel XL-2, Proxel TN; available from ICI).

Print image quality and storage stability can be further improved by blending these additives.

Examples of the ink are described below.

Aqueous liquids presented in Table 1, and oil liquids presented in Table 2 were prepared.

**Table 1**

| Abbreviation | Compound name |
|---|---|
| W1 | Water |
| W2 | Glycerin |

**Table 2**

| Abbreviation | Compound name |
|---|---|
| OL1 | Benzyl glycol |
| OL2 | Phenyl propylene glycol |
| OL3 | Phenyl glycol |
| OL4 | Benzyl alcohol |
| OL5 | Mineral oil |
| OL6 | Soy oil |

The compounds OL1, OL2, OL3, and OL4 in Table 2 are aromatic alcohols represented by general formula AA.

The compounds presented in Table 3 below were prepared as the monohydric aliphatic alcohols (solubilizers) soluble in the aqueous liquid and the oil liquid.

**Table 3**

| Abbreviation | Compound name |
|---|---|
| SA1 | Ethanol |
| SA2 | 1-Propanol |

These components were blended in the formulations shown in Tables 4 and 5 to prepare ink samples. In the tables, the amounts of aqueous liquid, oil liquid, and solubilizer are % by weight of the total ink.

Two types of pigment dispersion, a resin dispersed-type (DD1) and a self-dispersing-type (DD2), were prepared as pigments.
DD1: Carbon black dispersion Micropigmo AMBK-8 (Orient Chemical Industries Co., Ltd.)
DD2: Carbon black dispersion CAB-JET-400 (Cabot Corporation)

In DD1, a predetermined pigment is dispersed in ethanol with a predetermined amount of dispersant and other components. In DD2, a predetermined pigment is dispersed in water. The amount of ethanol contained in DD1 is included in the amount of solubilizer (SA1) in the tables below. The amount of water contained in DD2 is included in the amount of aqueous liquid (W1) in the tables below.

DD2 was used in sample Nos. 7 to 10, 13, 14, 18, and 22 to 27. DD1 was used in sample Nos. 1 to 6, 11, 12, 15 to 17, and 19 to 21.

As can be seen in the tables below, in all samples, the pigment dispersion was blended with a pigment amount of 5% by weight of the total ink.

All samples contained Proxel XL-2 (S) added as a preservative in 0.2% by weight of the total ink, though not shown in the tables.

For the preparation of the ink samples, the components were mixed in each formulation, and the mixture was stirred for 1 hour with a stirrer. The mixture was then filtered through a 3-µm membrane filter to give the sample.

**Table 4**

| No. | Aqueous liquid | | Oil liquid | Solubilizer | | Pigment | Dispersant and other |
|---|---|---|---|---|---|---|---|
| | W1 | W2 | OL4 | SA1 | SA2 | | |
| 1 | 10 | | 50 | 31 | | 5 | 4 |
| 2 | 15 | | 40 | 36 | | 5 | 4 |
| 3 | 18 | 24 | 35 | 14 | | 5 | 4 |
| 4 | 15 | 20 | 30 | 26 | | 5 | 4 |
| 5 | 22 | | 24 | 10 | 35 | 5 | 4 |
| 6 | 20 | | 50 | 21 | | 5 | 4 |
| 7 | 40 | 20 | 15 | 20 | | 5 | |
| 8 | 40 | | 30 | | 25 | 5 | |
| 9 | 60 | | 20 | 15 | | 5 | |
| 10 | 60 | | 20 | | 15 | 5 | |
| 11 | 14 | | 28 | 49 | | 5 | 4 |
| 12 | 23 | | 23 | 45 | | 5 | 4 |
| 13 | 70 | | 10 | 15 | | 5 | |
| 14 | 80 | | 10 | 5 | | 5 | |
| 15 | 5 | | 70 | 16 | | 5 | 4 |
| 16 | 10 | | 70 | 11 | | 5 | 4 |
| 17 | 8 | | 78 | 5 | | 5 | 4 |
| 18 | 70 | | 5 | 20 | | 5 | |

In Table 4, sample No. 14 has a large aqueous liquid content, and sample No. 15 has a small aqueous liquid content. Sample No. 17 has a small aqueous liquid content and a large oil liquid content. Sample No. 18 has a small oil liquid content.

**Table 5**

| No. | W1 | Oil liquid | | | | | | Solubilizer | | Pigment | Dispersant and other |
|---|---|---|---|---|---|---|---|---|---|---|---|
| | | OL1 | OL2 | OL3 | OL4 | OL5 | OL6 | SA1 | SA2 | | |
| 19 | 15 | 40 | | | | | | 24 | 12 | 5 | 4 |
| 20 | 15 | | 40 | | | | | 24 | 12 | 5 | 4 |
| 21 | 15 | | | 40 | | | | 24 | 12 | 5 | 4 |
| 22 | 40 | 30 | | | | | | | 25 | 5 | |
| 23 | 40 | | 30 | | | | | | 25 | 5 | |
| 24 | 40 | | | 30 | | | | | 25 | 5 | |
| 25 | 55 | 20 | | | | | | 20 | | 5 | |
| 26 | 55 | | 20 | | | | | 20 | | 5 | |
| 27 | 55 | | | 20 | | | | 20 | | 5 | |
| 28 | 10 | | | | | 30 | | 51 | | 5 | 4 |
| 29 | 10 | | | | | | 30 | 51 | | 5 | 4 |
| 30 | 14 | | | | 30 | 10 | | 35 | | 5 | 4 |
| 31 | 14 | | | | 30 | | 10 | 35 | | 5 | 4 |

In Table 5, the oil liquids in sample Nos. 28 and 29 did not contain aromatic alcohols represented by general formula AA.

The ink samples were used for printing on plain paper, and evaluations were made with regard to the fast dryness of ink, paper distortion suppressing ability, and print quality. Toshiba copy paper was used as the plain paper. An inkjet recording apparatus equipped with a Toshiba Tec piezoelectric head CB1 was used as the recording apparatus.

Evaluations were made as follows.

### Fast Dryness of the Ink

First, solid printing at 100% duty was performed on an area of 10 mm × 10 mm of the plain paper. After leaving the resulting plain paper as such for a predetermined time, new plain paper of the same type was laminated on the printed portion, and a weight of 300 g was placed thereon. After 10 seconds, the laminated plain paper was separated, and it was confirmed whether or not the ink was adhered.

The time until the new plain paper was laminated after the solid printing was set to 5 seconds, 10 seconds, and 30 seconds. In each of the cases, adhesion of the ink was visually examined and evaluation was performed according to the following criteria.
A (Excellent): No adhesion was observed when the set time was 5 seconds.
B (Good): Adhesion was observed when the set time was 5 seconds and no attachment was observed when the set time was 10 seconds.
C (Not acceptable): Adhesion was observed when the set time was 10 seconds and no adhesion was observed when the set time was 30 seconds.

### Paper Distortion Suppressing Ability

As in the fast-dryness test, solid printing was made at a 100% duty in a 10 mm × 100 mm region of a plain paper to obtain print samples. The extent of paper distortion (the magnitude of paper warping: cockle size) was determined using a laser displacement gauge, and evaluated based on the concave-convex amount (length), as follows.
A (Excellent): less than 0.5 mm
B (Good): Less than 1.0 mm
C (Not acceptable): Less than 2.0 mm
D (Poor): 2.0 mm or more

### Print Quality

Texts and a solid image were printed on a plain paper, and print quality was evaluated. The printed texts were visually inspected to determine the presence or absence of bleed or feathering. The image density of the printed solid image was measured using an X-Rite densitometer on the both sides of the paper. The results were evaluated according to the following criteria.
A (Excellent): Image density, 1.25 or more; image density on the back, 0.2 or less; desirable text image
B (Good): Image density, 1.2 or more; image density on the back, 0.3 or less; almost no bleed in text image
C (Not acceptable): Image density, 1.1 or less; image density on the back, 0.4 or less; bleed present in text image

The samples pass the tests when the evaluation results concerning the three criteria--the fast dryness of ink, paper distortion suppressing ability, and print quality--are either "B" or "A". In other words, samples fail when the result for any of the criteria is "C". The results are summarized in Tables 6 and 7 below.

**Table 6**

| No. | Fast dryness | Distortion suppressing ability | Print quality |
|---|---|---|---|
| 1 | B | A | B |
| 2 | B | A | B |
| 3 | B | B | B |
| 4 | A | B | B |
| 5 | A | A | B |
| 6 | B | A | B |
| 7 | B | B | A |
| 8 | B | B | A |
| 9 | B | B | A |
| 10 | B | B | A |
| 11 | A | A | B |
| 12 | A | A | B |
| 13 | B | B | A |
| 14 | B | D | A |
| 15 | B | B | C |
| 16 | B | B | B |
| 17 | B | B | C |
| 18 | C | D | A |

As can be seen in Table 6, sample Nos. 1 to 13, and 16 all had desirable results in the fast dryness of ink, paper distortion suppressing ability, and print quality. Each of these samples contained 70 to 10% by weight of aromatic alcohol (benzyl alcohol) represented by general formula AA as the oil liquid, and used a specific monohydric aliphatic alcohol as the solubilizer. The results were desirable in all three criteria, because the aqueous liquid content fell within the range of 10 to 70% by weight.

Sample No. 14 had poor paper distortion suppressing ability, because it contained the aqueous liquid in an amount as large as 80% by weight. Print quality was undesirable in sample No. 15 that contained the aqueous liquid in an amount as small as 5% by weight, and the ink failed to produce a desirable image density. Further, because a large proportion of the ink penetrated to the back of the plain paper, the back side of the paper had an increased image density. This is considered to be due to the excessively small amount of aqueous liquid, insufficient to suppress the permeation of the ink.

Print quality was also inferior in sample No. 17 that contained the aqueous liquid in an amount as small as 8% by weight, and the oil liquid in an amount as large as 78% by weight. Paper distortion suppressing ability was poor in sample No. 18, in which the amount of oil liquid was as small as 5% by weight. Further, fast dryness was inferior, because the effect of the aqueous liquid predominated.

**Table 7**

| No. | Fast dryness | Paper Distortion | Print quality |
|---|---|---|---|
| 19 | A | A | B |
| 20 | A | A | B |
| 21 | A | A | B |
| 22 | B | B | B |
| 23 | B | B | B |
| 24 | B | B | B |
| 25 | B | B | A |
| 26 | B | B | A |
| 27 | B | B | A |
| 28 | B | A | D |
| 29 | B | A | D |
| 30 | B | B | B |
| 31 | B | B | B |

As can be seen in Table 7, sample Nos. 19 to 27, 30, and 31 all had desirable results in the fast dryness of ink, paper distortion suppressing ability, and print quality. Each of these samples contained 10 to 70% by weight of an aromatic alcohol (benzyl glycol, phenyl propylene glycol, phenyl glycol, benzyl alcohol) represented by general formula AA as the oil liquid, and used a specific monohydric aliphatic alcohol as the solubilizer. Further, the aqueous liquid content fell within the range of 10 to 70% by weight. Therefore, the results were desirable in all three criteria.

Sample Nos. 28 and 29 did not contain an aromatic alcohol represented by general formula AA as the oil liquid. Because the oil liquid was a low-volatile component such as mineral oil or soy oil, print quality was poor.

Ink characteristics are not lost as long as the aromatic alcohol represented by general formula AA is contained, even when a component such as a mineral oil accounts for 30% by weight or less of the oil liquid. Sample Nos. 30 and 31 had desirable results in all of the fast dryness of ink, paper distortion suppressing ability, and print quality.

The inkjet ink of one embodiment excels in fast dryness, and can produce a high-quality image on paper medium without causing distortion in paper medium.

Further, by using the inkjet ink that excels in fast dryness, an inkjet recording method of one embodiment can produce a high-quality image without causing distortion in paper medium.

## Claims

1. An inkjet ink **characterized by** comprising:
a pigment;
an aqueous liquid that accounts for 10 to 70% by weight of the inkjet ink;
an oil liquid that accounts for 70 to 10% by weight of the inkjet ink, and that is at least partly an aromatic alcohol represented by general formula AA, 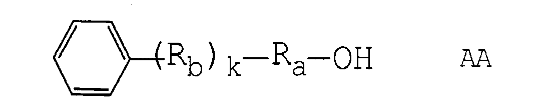 where Rₐ represents an aliphatic hydrocarbon group having 1 to 5 carbon atoms, R_{b} represents -O-or -CH₂O-, and k represents 0 or 1; and
a monohydric aliphatic alcohol that has 3 or fewer carbon atoms, and is soluble in the aqueous liquid and the oil liquid.

2. The ink according to claim 1, **characterized in that** the aqueous liquid accounts for 20 to 40% by weight of the inkjet ink.

3. The ink according to claim 1, **characterized in that** at least 40% by weight of the aqueous liquid is water.

4. The ink according to claim 1, **characterized in that** the aqueous liquid comprises a water-soluble compound.

5. The ink according to claim 4, **characterized in that** the water-soluble compound is selected from the group consisting of glycerin, diglycerin, polyglycerin, ethylene glycol, diethylene glycol, triethylene glycol, polyethylene glycol, tripropylene glycol, polypropylene glycol, 1,2,6-hexanetriol, 1,2,4-butanetriol, 1,2,3-butanetriol, 3-methyl-1,3,5-pentanetriol, sorbitol, mannitol, and maltitol.

6. The ink according to claim 1, **characterized in that** the oil liquid accounts for 60 to 20% by weight of the inkjet ink.

7. The ink according to claim 1, **characterized in that** at least 70% by weight of the oil liquid is the aromatic alcohol.

8. The ink according to claim 1, **characterized in that** the monohydric aliphatic alcohol accounts for 10 to 50% by weight of the inkjet ink.

9. The ink according to claim 1, **characterized in that** the pigment has an average particle diameter of 10 to 300 nm.

10. The ink according to claim 1, **characterized by** further comprising a dispersant that disperses the pigment.

11. The ink according to claim 1, **characterized in that** the pigment comprises a functional group or a salt thereof on its surface.

12. The ink according to claim 1, **characterized in that** a viscosity of the ink at 25°C is 3 to 50 mPa·s.

13. A method for inkjet printing **characterized by** comprising:
ejecting at least one type of ink composition from an inkjet head onto a paper medium to form an image, the ink composition being the ink according to claim 1.

14. The method according to claim 13, **characterized in that** the formation of an image is performed using one type of ink composition.

15. The method according to claim 13, **characterized in that** the formation of an image is performed using 2 or more types of ink compositions of different colors.
